## Europäisches Patentamt
## European Patent Office
## Office européen des brevets

(19)

(11) **EP 1 734 657 A1**

(12) **EUROPÄISCHE PATENTANMELDUNG**

(43) Veröffentlichungstag:
**20.12.2006 Patentblatt 2006/51**

(51) Int Cl.:
***H03K 17/082*** *(2006.01)*

(21) Anmeldenummer: **06005811.2**

(22) Anmeldetag: **22.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **14.06.2005 DE 102005027446**

(71) Anmelder: **Infineon Technologies AG**
**81669 München (DE)**

(72) Erfinder:
• **Picaud, Benoit**
  **9500 Villach (AT)**
• **Rothleitner, Hubert**
  **9500 Villach (AT)**

(74) Vertreter: **Bickel, Michael**
**Westphal - Mussgnug & Partner**
**Patentanwälte**
**Mozartstrasse 8**
**80336 München (DE)**

(54) **Schaltungsanordnung zum Schutz gegen Überströme und Überspannungen sowie gegen auf den Leitungen auftretenden Kurzschlüssen und Verfahren**

(57) Die Erfindung betrifft eine Treiber- und Empfängerschaltung, die folgende Merkmale aufweist:
- wenigstens eine Ausgangsklemme (101, 102) zum Anschließen einer Leitungsverbindung (31, 32),
- eine an die wenigstens eine Ausgangsklemme (101, 102) angeschlossene Spannungsversorgungsanordnung (13),
- eine an die wenigstens eine Ausgangsklemme (101) angeschlossene Strommessanordnung (12), die dazu ausgebildet ist, einen Strom (Icut) an der wenigstens einen Anschlussklemme (101) zu erfassen und ein von diesem Strom abhängiges Strommesssignal (V12) zu erzeugen,
- eine Steuerschaltung (12), der das Strommesssignal zugeführt ist,
- wenigstens eine Überwachungsschaltung (15; 15_1, 15_2), die dazu ausgebildet ist, den Strom (I_out) an der wenigstens einen Anschlussklemme (101) zu erfassen und ein Fehlersignal (S15; S15_1, S15_2) auszugeben, wenn der Strom für eine Zeitdauer (T2), die länger als eine vorgegebene erste Zeitdauer (T1) ist, oberhalb eines vorgegebenen Schwellenwertes liegt.

## FIG 3

Printed by Jouve, 75001 PARIS (FR)

**Beschreibung**

Die Erfindung betrifft eine Treiber- und Empfängerschaltung für eine entfernt angeordnete Schaltung und ein Verfahren zur Überwachung einer Leitungsverbindung zwischen einer Treiber-und Empfängerschaltung und einer entfernt angeordneten Schaltung.

Treiber- und Empfängerschaltungen für eine entfernt angeordnete Schaltung sind hinlänglich bekannt und dienen beispielsweise zur Spannungsversorgung von entfernt angeordneten Sensoren und zum Empfang von Sensorsignalen von solchen Sensoren. Ein Beispiel für eine solche Treiber- und Empfängerschaltung ist der integrierte Baustein TLE7719-T der Infineon Technologies AG, München, der zur Spannungsversorgung von Airbag-Sensoren und zur Kommunikation mit Airbag-Sensoren dient. Dieser Baustein ist in dem Datenblatt "SatRIC™ Airbag Satellite Receive IC, TLE7719-T", Version 1.1, 2004-09-13, Infineon Technolgies AG, München, beschrieben.

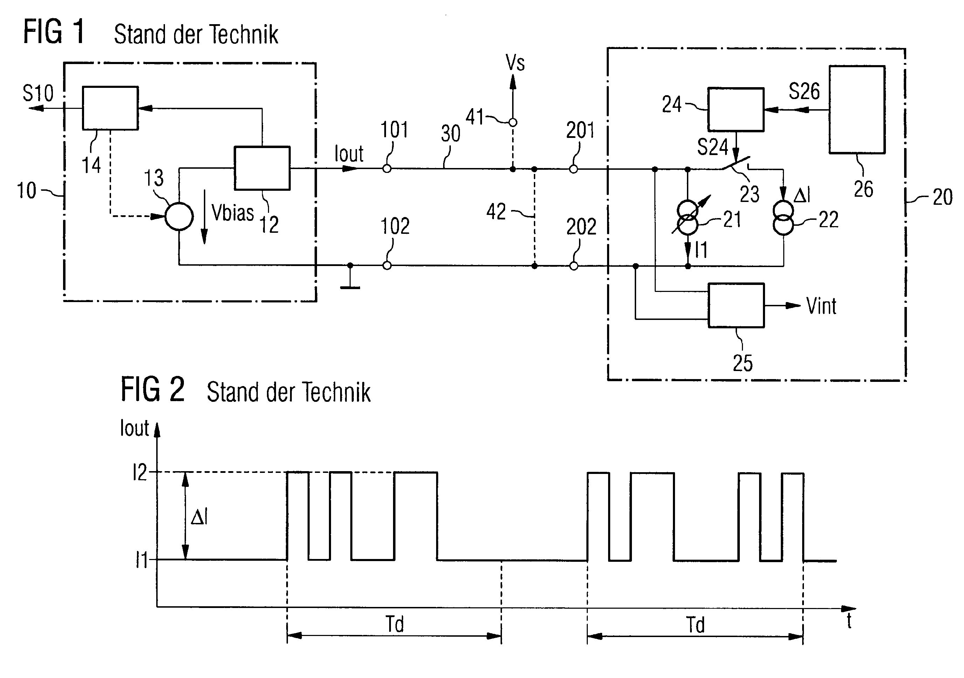

Zum besseren Verständnis wird der grundsätzliche Aufbau einer solchen Treiber- und Empfängerschaltung und dessen Verschaltung mit einer entfernt angeordneten Schaltung, die nachfolgend als "Satellitenschaltung" bezeichnet ist, anhand von Figur 1 erläutert.

Die Treiber- und Empfängerschaltung ist in Figur 1 mit dem Bezugzeichen 10, die Satellitenschaltung mit dem Bezugzeichen 20 bezeichnet. Die Treiber- und Empfängerschaltung 10 weist Ausgangsklemmen 101, 102 zum Anschließen einer Leitungsverbindung 30 auf. Über diese Leitungsverbindung 30 erfolgt während des Betriebes die Spannungsversorgung der Satellitenschaltung 20 und die Übertragung von Informationen von der Satellitenschaltung 20 zu der Treiber- und Empfängerschaltung 10.

Die Treiber- und Empfängerschaltung 10 stellt über die Anschlussklemmen 101, 102 an der Leitungsverbindung 30 mittels einer Spannungsquelle 13 eine Versorgungsspannung Vbias zur Verfügung. Die Treiber- und Empfängerschaltung 10 ermittelt mittels einer Strommessanordnung 12 außerdem einen über die Anschlüsse 101, 102 fließenden Strom Iout und liefert eine Strominformation an eine zentrale Steuerschaltung 14.

Die Satellitenschaltung 20 ist über Anschlüsse 201, 202 an die Leitungsverbindung 30 angeschlossen und ist dazu ausgebildet, den über die Leitungsverbindung 30 fließenden Strom so zu modulieren, dass er einen ersten oder einen zweiten Stromwert annimmt. Die Satellitenschaltung 20 weist hierfür beispielsweise zwei Stromquellen 21, 22 auf, von denen eine erste 21 stets an die Leitungsverbindung 30 angeschlossen ist und von denen eine zweite nach Maßgabe eines Steuersignals 24 über einen Schalter 23 parallel zu der ersten Stromquelle 21 geschaltet werden kann. Die Satellitenschaltung 20 umfasst beispielsweise einen Sensor 26, wie beispielsweise einen Airbag-Sensor, der ein Sensorsignal S26 bereitstellt, nach dessen Maßgabe eine Treiberschaltung 24 das Steuersignal S24 zur Modulation des Stromes Iout erzeugt.

Eine interne Versorgungsspannung Vint der Satellitenschaltung 20 wird durch eine Spannungsversorgungsschaltung 25 aus der an der Leitungsverbindung 30 anliegenden Spannung Vbias erzeugt.

Figur 2 zeigt beispielhaft den zeitlichen Verlauf des Stromes Iout, der über die Leitungsverbindung 30 fließt. Dieser Strom nimmt während eines störungsfreien Betriebes zwei Stromwerte an, einen ersten Stromwert I1 der dem von der ersten Stromquelle 21 gelieferten Strom entspricht, und einen zweiten Stromwert I2, der der Summe der von den beiden Stromquellen 21, 22 der Satellitenschaltung 20 gelieferten Ströme entspricht. Der über die Leitungsverbindung 30 fließende Strom Iout repräsentiert ein kodiertes bzw. moduliertes Signal. Die von der Satellitenschaltung 20 an die Empfängerschaltung 10 zu übertragende Information kann dabei in den beiden unterschiedlichen Pegeln des Stromsignals Iout oder in den Pegelwechseln dieses Stromsignals Iout enthalten sein. Die Information von der Satellitenschaltung 20 an die Empfängerschaltung 10 wird beispielsweise in Form von "Datenpaketen" übertragen, deren einzelne Informationssymbole aufeinanderfolgend innerhalb einer Zeitdauer Td übertragen werden.

Die Empfängerschaltung 10 ist dazu ausgebildet, die in dem Stromsignal Iout enthaltende Information zu demodulieren und gegebenenfalls zu dekodieren und ein Steuersignal S10 zu erzeugen, das beispielsweise ein Zündsignal für ein Insassenschutzsystem eines Kraftfahrzeugs sein kann.

Ein fehlerhafter Betriebszustand kann bei einer solchen Empfängerschaltung dann auftreten, wenn ein Kurzschluss zwischen den Anschlussklemmen 101, 102 auftritt, wie dies in Figur 1 mit dem Bezugzeichen 42 veranschaulicht ist. Ein weiterer fehlerhafter Betriebszustand liegt dann vor, wenn ein Kurzschluss der Leitungsverbindung 30 zu einer Klemme für ein Versorgungspotential Vs vorhanden ist. Die Auswirkungen eines solchen Fehlers sind, dass die Kommunikationsverbindung zu der Satellitenschaltung 20 unterbrochen ist. Darüber hinaus kann die Treiber- und Empfängerschaltung 10 infolge eines solchen Fehlers beschädigt werden, weil die während eines solchen Fehlerzustandes fließenden Ströme erheblich größer sein können, als die während des Normalbetriebs fließenden Ströme. Außerdem kann ein permanenter Überstrom zu einem Einbrechen der Spannungsversorgung und damit auch zu einer Störung benachbarter Kanäle (nicht dargestellt) führen.

Zum Schutz der Treiber- und Empfängerschaltung vor solch hohen Strömen ist es grundsätzlich bekannt, eine Strombegrenzungsanordnung vorzusehen, die die Ausgangsströme der Schaltung 10 begrenzt. Da die Empfängerschaltung allerdings in der Lage sein muss, für kurze Zeitdauern vergleichsweise hohe Ströme zu erzeugen, muss der Stromgrenzwert vergleichsweise hoch angesetzt werden, so dass es bei dauerhaft fließenden Strömen, die dem Stromgrenzwert entsprechen, zu einer Überhitzung und gegebenenfalls Beschädigung der Schaltung 10 kommen kann.

Vor einer solchen Überhitzung kann eine Übertemperaturabschaltung schützen, die allerdings abhängig von der Umgebungstemperatur erst zeitverzögert anspricht.

Ziel der vorliegenden Erfindung ist es, eine Treiber- und Empfängerschaltung zur Verfügung zu stellen, die gegen Fehlerzustände besser geschützt ist, und ein Verfahren zur Überwachung einer an eine Treiber- und Empfängerschaltung angeschlossene Leitungsverbindung zur Verfügung zu stellen.

Dieses Ziel wird durch eine Treiber- und Empfängerschaltung nach Anspruch 1 und durch ein Verfahren nach Anspruch 11 erreicht.

Die erfindungsgemäße Treiber- und Empfängerschaltung weist wenigstens eine Ausgangsklemme zum Anschließen einer Leitungsverbindung, eine an die wenigstens eine Ausgangklemme angeschlossene Spannungsversorgungsanordnung und eine an die wenigstens eine Ausgangsklemme angeschlossene Strommessanordnung auf. Die Strommessanordnung ist dazu ausgebildet, einen Strom an der wenigstens einen Anschlussklemme zu erfassen und ein von diesem stromabhängiges Strommesssignal zu erzeugen, das einer Steuerschaltung zugeführt ist. Die Treiber- und Empfängerschaltung weist außerdem wenigstens eine Überwachungsschaltung auf, die dazu ausgebildet ist, den Strom an der wenigstens einen Anschlussklemme zu erfassen und ein Fehlersignal auszugeben, wenn der Strom für eine Zeitdauer, die länger als eine vorgegebene Zeitdauer ist, oberhalb eines vorgegebenen Schwellenwertes liegt.

Die Spannungsversorgungsanordnung ist vorzugsweise über das von der Überwachungsschaltung erzeugte Fehlersignal deaktivierbar. Die Deaktivierung der Spannungsversorgungsanordnung erfolgt bei einer Ausführungsform der Erfindung unmittelbar über das Fehlersignal und bei einer anderen Ausführungsform der Erfindung mittelbar über die Steuerschaltung. Der Steuerschaltung ist dabei das Fehlersignal zugeführt, und die Steuerschaltung ist dazu ausgebildet, abhängig von dem Fehlersignal die Spannungsversorgungsanordnung zu deaktivieren.

Die Spannungsversorgungsanordnung kann durch ein Steuersignal, das beispielsweise durch die Steuerschaltung erzeugt wird, aktiviert und deaktiviert werden. Die Überwachungsschaltung ist dabei vorzugsweise dazu ausgebildet, nach einem Pegelwechsel des Steuersignals auf einen die Spannungsversorgungsanordnung aktivierenden Pegel das Fehlersignal frühestens nach Ablauf einer zweiten Zeitdauer nach diesem Pegelwechsel zu erzeugen. Hierdurch wird berücksichtigt, dass nach Aktivieren der Spannungsversorgungsanordnung selbst bei fehlerfreiem Betriebszustand für eine vorgegebene Zeitdauer ein erhöhter Strom über die Ausgangsklemmen fließen kann, bis eine unweigerlich vorhandene parasitäre Kapazität der Leitungsverbindung aufgeladen ist.

Das erfindungsgemäße Verfahren zur Überwachung einer an eine Treiber- und Empfängerschaltung angeschlossenen Leitungsverbindung sieht vor, einen in die Leitungsverbindung oder aus der Leitungsverbindung fließenden Strom zu ermitteln und einen von diesem stromabhängigen Strommesswert zu erzeugen, den Strommesswert mit einem Referenzwert zu vergleichen, und ein Fehlersignal zu erzeugen, wenn der Strommesswert den Referenzwert für eine Zeitdauer übersteigt, die länger als eine vorgegebene erste Zeitdauer ist.

Vorzugsweise wird das Fehlersignal dabei nach einem Pegelwechsel einer an der Leitungsverbindung anliegenden Spannung frühestens nach Ablauf einer zweiten Zeitdauer zu erzeugen.

Die vorliegende Erfindung wird nachfolgend anhand von Figuren näher erläutert.

Figur 1     zeigt einer Treiber- und Empfängerschaltung mit einer daran angeschlossenen Satellitenschaltung nach dem Stand der Technik.

Figur 2     zeigt den zeitlichen Verlauf des durch die Satellitenschaltung modulierten Ausgangsstromes der Treiber- und Empfängerschaltung nach Figur 1.

Figur 3     zeigt ein erstes Ausführungsbeispiel einer erfindungsgemäßen Treiber- und Empfängerschaltung.

Figur 4     zeigt ein schaltungstechnisches Realisierungsbeispiel für eine in der Treiber- und Empfängerschaltung vorhandene Strommessanordnung.

Figur 5     zeigt ein erstes Ausführungsbeispiel einer in der Treiber- und Empfängerschaltung vorhandenen Überwachungsschaltung.

Figur 6     zeigt beispielhaft zeitliche Verläufe des Ausgangsstromes der Treiber- und Empfängerschaltung sowie eines Ausgangssignals der Überwachungsschaltung.

Figur 7     zeigt ein zweites Ausführungsbeispiel einer Überwachungsschaltung.

Figur 8     zeigt zeitliche Verläufe eines Ausgangsstromes der Treiber- und Empfängerschaltung sowie eines Ausgangssignals der Überwachungsschaltung.

Figur 9     zeigt ein weiteres Ausführungsbeispiel einer Überwachungsschaltung.

Figur 10    zeigt beispielhaft zeitliche Verläufe ausgewählter, in der Überwachungsschaltung nach Figur 9 vorkommender Signale.

Figur 11    zeigt ein Ausführungsbeispiel einer erfindungsgemäßen Treiber- und Empfängerschaltung, die zwei Überwachungsschaltungen aufweist.

Figur 12    zeigt ein weiteres Ausführungsbeispiel einer Strommessanordnung.

Figur 13    zeigt ein Ausführungsbeispiel einer einen Stromspiegel aufweisenden Strommessanordnung.

Figur 14    zeigt ein weiteres Ausführungsbeispiel einer einen Stromspiegel aufweisenden Strommessanordnung.

Figur 15    zeigt ein weiteres Ausführungsbeispiel einer erfindungsgemäßen Treiber- und Empfängerschaltung.

In den Figuren bezeichnen, sofern nicht anders angegeben, gleiche Bezugszeichen gleiche Schaltungskomponenten und Signale mit gleicher Bedeutung.

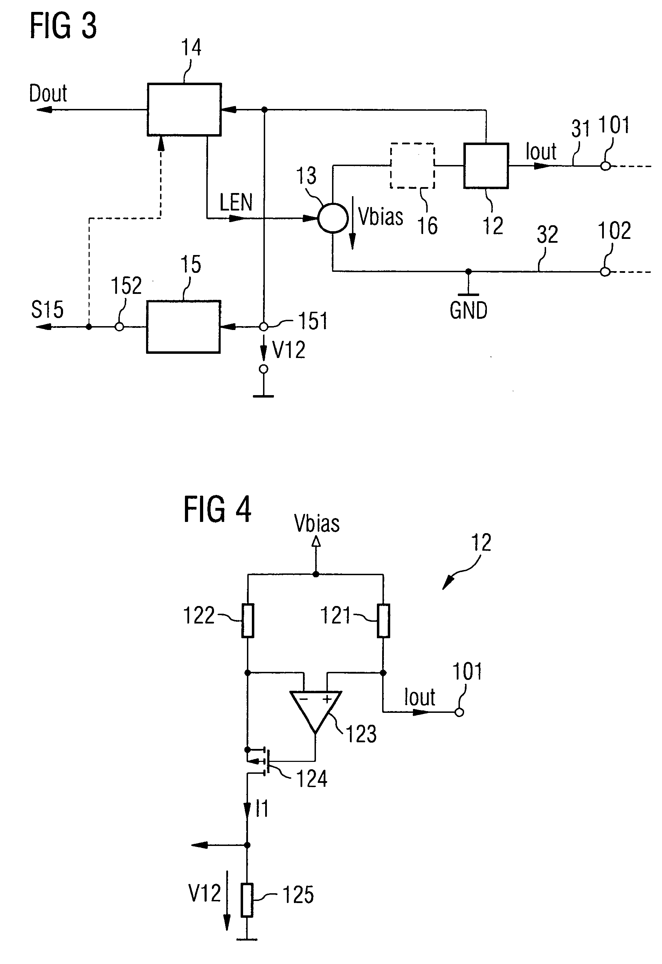

Figur 3 zeigt ein erstes Ausführungsbeispiel einer erfindungsgemäßen Treiber- und Empfängerschaltung. Diese Treiber- und Empfängerschaltung weist Ausgangsklemmen 101, 102 zum Anschließen einer Leitungsverbindung (in Figur 3 nicht dargestellt) auf. An diese Ausgangsklemmen 101, 102 ist eine Vorspannungsquelle 13 gekoppelt, die nach Maßgabe eines Steuersignals LEN eine Vorspannung bzw. Versorgungsspannung Vbias an den Anschlussklemmen 101, 102 zur Verfügung stellt.

Eine Strommessanordnung 12 ist zwischen die als Spannungsversorgungsanordnung dienende Spannungsquelle 13 und eine der Anschlussklemmen 101 geschaltet. Aufgabe dieser Strommessanordnung 12 ist es, einen über die Anschlussklemmen 101, 102 fließenden Ausgangsstrom Iout zu erfassen und ein von diesem Ausgangsstrom Iout abhängiges Strommesssignal V12 zur Verfügung zu stellen. Dieses Strommesssignal V12 ist einer Auswerte- und Steuerschaltung 14 zugeführt, die ein Ausgangssignal DOUT aus dem Spannungsmesssignal V12 erzeugt. Die Steuer- und Auswerteschaltung 14 kann eine herkömmliche Steuer- und Auswerteschaltung sein, die insbesondere dazu ausgebildet ist, Dateninformationen, die dem Ausgangsstrom Iout bzw. dem Strommesssignal V12 aufmoduliert sind, zu demodulieren und in das Ausgangssignal DOUT umzusetzen. Die Steuer- und Auswerteschaltung 14 stellt außerdem das Steuersignal LEN zur Verfügung, nach dessen Maßgabe die Spannungsquelle 13 aktiviert und deaktiviert wird.

Die Treiber- und Empfängerschaltung weist eine Überwachungsschaltung 15 auf, der das Strommesssignal V12 an einem Eingang 151 zugeführt ist und die dazu ausgebildet ist, an einem Ausgang 152 ein Fehlersignal S15 abhängig von dem Strommesssignal V12 zu erzeugen. Diese Überwachungsschaltung 15 ist dazu ausgebildet, einen auf einen Fehler hinweisenden Pegel des Fehlersignals S15 dann zu erzeugen, wenn über das Strommesssignal V12 erkannt wird, dass der Ausgangsstrom Iout länger als eine vorgegebene erste Zeitdauer oberhalb eines vorgegebenen Schwellenwertes liegt. Das Strommesssignal V12 ist vorzugsweise proportional zu dem Ausgangsstrom Iout, so dass die Überwachungsschaltung 15 dann einen auf einen Fehler hinweisenden Pegel des Fehlersignals S15 erzeugt, wenn das Strommesssignal V12 für einen Zeitraum, der länger ist als die vorgegebene erste Zeitdauer oberhalb eines Messsignalgrenzwertes liegt.

Um einen fehlerhaften Betriebszustand möglichst rasch erkennen zu können, ist die erste Zeitdauer möglichst kurz. Diese erste Zeitdauer ist vorzugsweise jedoch länger als eine Datenblockperiode (Td in Figur 2) während derer der Ausgangsstrom Iout durch eine Satellitenschaltung (in Figur 3 nicht dargestellt) moduliert wird. Solche Datenblöcke sind durch Zeitabschnitte getrennt, während derer der Ausgangsstrom Iout im fehlerfreien Betriebszustand einen niedrigen Strompegel annimmt. Verbleibt der Ausgangstrom Iout während einer Zeitdauer, die länger als diese Datenblockperiode Td ist, oberhalb des unteren Strompegels I1 so deutet dies bereits auf einen fehlerhaften Betriebszustand hin. Der Strompegel, mit welchem der Ausgangsstrom Iout und die Überwachungsschaltung verglichen wird, muss oberhalb des unteren Strompegels I1 liegen, kann jedoch kleiner sein als der obere Strompegel I2, da im fehlerfreien Betrieb spätestens nach Ablauf der Datenblockperiode Td der Ausgangsstrom Iout absinkt.

Figur 4 zeigt ein schaltungstechnisches Realisierungsbeispiel für die in Figur 3 dargestellte Strommessanordnung 12, die zwischen die Versorgungsspannungsquelle 13 und den ersten Ausgang 101 geschaltet ist und die das Strommesssignal V12 erzeugt. Diese Strommessanordnung 12 weist einen zwischen die Klemme für das Versorgungspotential Vbias und den Ausgang 101 geschalteten Messwiderstand 121 auf, der von dem Ausgangsstrom durchflossen ist. An diesen Strommesswiderstand 121 ist eine Stromspiegelanordnung mit einem weiteren Widerstand 122, einem Operationsverstärker 123 und einem Transistor 124 angeschlossen, die dazu ausgebildet ist, einen Messstrom I1 zu erzeugen, der proportional zu dem Ausgangsstrom Iout ist. Der Widerstand 122 der Stromspiegelanordnung liegt in Reihe zu dem als Regelglied dienenden Transistor 124. Der Operationsverstärker 122 ist an die dem Versorgungspotential Vbias abgewandten Anschlüsse der beiden Transistoren 121, 122 geschaltet und steuert den Regeltransistor 124 so an, dass der Spannungsabfall über dem weiteren Widerstand 122 dem Spannungsabfall über dem Messwiderstand 121 entspricht. Der den weiteren Widerstand 122 durchfließende Strom I1 ist dann proportional zu dem Ausgangsstrom Iout. Der Proportionalitätsfaktor ergibt sich dabei aus dem Verhältnis der Widerstandswerte der beiden Widerstände, wobei gilt:

$$I1 = R121/R122 \cdot Iout \hspace{4cm} (1).$$

Mit R121, R122 sind dabei die Widerstandswerte der beiden Widerstände 122, 121 bezeichnet.

In Reihe zu dem Transistor 124 ist ein Stromerfassungswiderstand 125 geschaltet, der von dem Messstrom I1 durchflossen wird. Über diesem Erfassungswiderstand 125 liegt das zu dem Ausgangsstrom Iout proportionales Strommesssignal V12 an. Das Strommesssignal V12 ist in diesem Beispiel ein Spannungssignal, das der Steuerschaltung 14 zugeführt wird. Für das Verhältnis zwischen Ausgangsstrom Iout und Strommesssignal V12 gilt in dem Beispiel:

$$V12 = R125 \cdot R121/R122 \cdot Iout \hspace{3cm} (2).$$

Mit R125 ist dabei der Widerstandswert des Stromerfassungswiderstandes 125 bezeichnet.

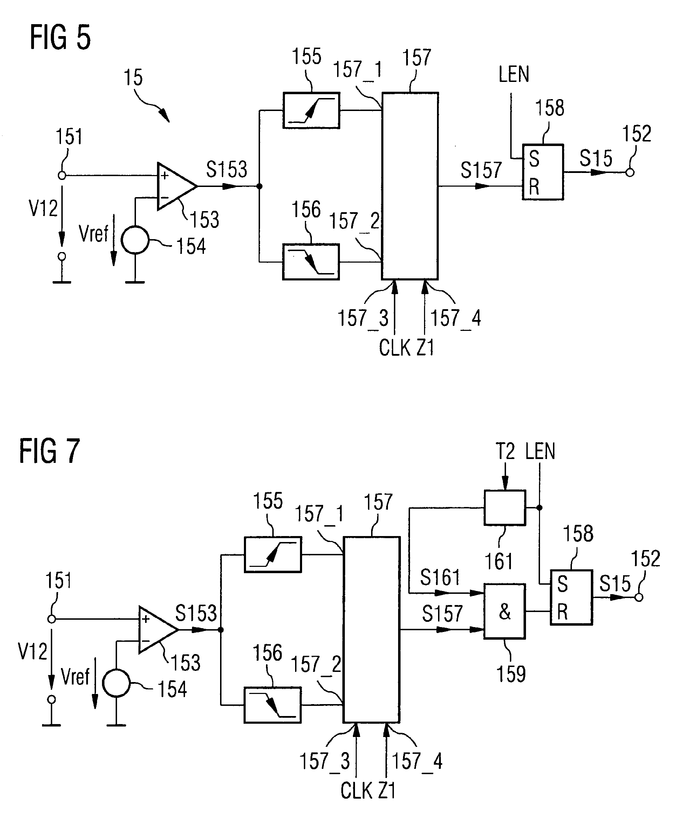

Figur 5 zeigt ein schaltungstechnisches Realisierungsbeispiel für die Überwachungsschaltung 15, der das Strommesssignal V12 zugeführt ist, und die das Fehlersignal S15 abhängig von diesem Strommesssignal V12 erzeugt.

Die Überwachungsschaltung 15 weist einen Vergleicher 153 auf, dessen einem Eingang, in dem Beispiel dem Plus-Eingang, das Strommesssignal V12 zugeführt ist, und dessen anderem Eingang, in dem Beispiel dem Minus-Eingang, ein von einer Referenzspannungsquelle 154 erzeugtes Referenzsignal Vref zugeführt ist. Der Vergleicher 153 erzeugt ein Vergleichssignal S153, welches von dem Vergleich des Referenzsignals Vref mit dem Strommesssignal V12 abhängig ist. Dieses Vergleichssignal S153 weist in dem Beispiel einen High-Pegel auf, wenn das Strommesssignal V12 größer als das Referenzsignal Vref ist, und weist einen Low-Pegel auf, wenn das Messsignal V12 kleiner als das Referenzsignal Vref ist.

Dem Vergleicher 153 sind erste und zweite Flankendetektoren 155, 156 nachgeschaltet. Der erste Flankendetektor 155 detektiert steigende Flanken des Vergleichssignal S153, und der zweite Flankendetektor 156 detektiert fallende Flanken des Vergleichssignals S153. Diese Flankendetektoren 155, 156 sind beispielsweise dazu ausgebildet, nach einer steigenden bzw. fallenden Flanke des Vergleichssignals S153 einen Signalimpuls an ihren Ausgängen zur Verfügung zu stellen. Ein Ausgangssignal S155 des ersten Flankendetektors 155 ist einem Start-Eingang 157_1 eines nachgeschalteten Zählers 157 zugeführt. Ein Ausgangssignal S156 ist einem Rücksetz-Eingang 157_2 dieses Zählers 257 zugeführt. Dieser Zähler 157 ist dazu ausgebildet, nach Erhalt eines Startimpulses an dem Start-Eingang 157_1 im Takt eines Taktsignals CLK, das einem Takteingang 157_3 zugeführt ist, ausgehend von einem Anfangswert hochgezählt zu werden. Dieser Zählvorgang wird unterbrochen und der Zähler wird zurückgesetzt, wenn am Rücksetz-Eingang 157_2 ein Rücksetzimpuls anliegt. Der Zähler 157 stellt ein zweiwertiges Zählersignal S157 zur Verfügung. Dieses Zählersignal S157 nimmt einen High-Pegel an, wenn ein interner Zählerstand des Zählers 157 einen ersten Zählerstand Z1 erreicht. Dieser Zählerstand ist über einen weiteren Eingang 157_4 des Zählers 157 einstellbar.

Das Zählersignal S157 ist einem Rücksetz-Eingang R eines nachgeschalteten Flip-Flops 158 zugeführt. Dem Setzeingang 158 dieses Flip-Flops ist in dem Beispiel das Aktivierungssignal LEN der Spannungsquelle (13 in Figur 3) zugeführt. Am Ausgang des Flip-Flops 158 steht das Fehlersignal S15 zur Verfügung. Dieses Fehlersignal S15 nimmt in dem Beispiel einen High-Pegel an, wenn das Aktivierungssignal LEN einen High-Pegel annimmt, um die Spannungsquelle 13 zu aktivieren. Ein High-Pegel des Fehlersignals S15 weist in diesem Zusammenhang auf einen fehlerfreien Betriebszustand hin.

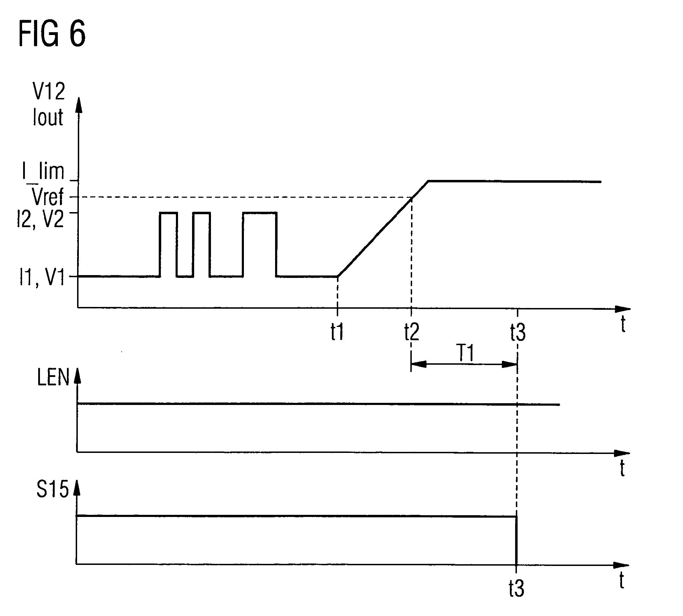

Das Flip-Flop 158 wird über einen High-Pegel des Zählersignals S157 zurückgesetzt, wodurch das Fehlersignal S15 einen Low-Pegel annimmt, der in diesem Fall auf einen fehlerbehafteten Betriebszustand hinweist. Die Vorgänge, die zu einem Zurücksetzen des Flip-Flops 158 und damit zur Erzeugung eines auf einen Fehler hinweisenden Pegels des Fehlersignals S15 führen, werden nachfolgend anhand von Figur 6 erläutert.

In Figur 6 ist beispielhaft der zeitliche Verlauf des Ausgangsstromes Iout bzw. der zeitliche Verlauf des zu diesem Ausgangsstrom Iout proportionalen Strommesssignals V12 aufgetragen. In dem dargestellten Beispiel wird angenommen, dass bis zu einem Zeitpunkt t1 ein fehlerfreier Zustand vorliegt, so dass bis zu diesem Zeitpunkt t1 der Ausgangsstrom Iout moduliert durch eine Satellitenschaltung zwischen einem unteren Strompegel I1 und einem oberen Strompegel I2 hin- und hergeschaltet wird. Dem unteren Strompegel I1 entspricht ein erster Strommesssignalpegel V1 des Strommesssignals V12, und dem oberen Strompegel I2 entspricht ein oberer Strommesssignalpegel V2. Zu dem Zeitpunkt t1 tritt ein Fehler auf, durch welchen der Ausgangsstrom Iout dauerhaft auf einen Wert ansteigt, der oberhalb des oberen Strompegels I2 liegt. Bezugnehmend auf Figur 1 kann ein solcher Fehler beispielsweise dadurch auftreten, dass die Anschlussklemmen 101, 102 der Treiber- und Empfängerschaltung 10 kurzgeschlossen werden. Durch eine vorzugsweise vorhandene, in Figur 3 mit dem Bezugszeichen 16 bezeichnete Strombegrenzungsschaltung wird der Ausgangsstrom Iout in einem solchen Fall auf einen oberen Grenzwert I_lim begrenzt.

Der Referenzwert Vref, mit welchem das Spannungsmesssignal verglichen wird, ist in dem Beispiel größer als der zweite Strommesssignalpegel V2. Das Strommesssignal V12 erreicht diesen Referenzpegel Vref zu einem Zeitpunkt t2. Zu diesem Zeitpunkt t2 detektiert der erste Flankensignaldetektor 155 eine steigende Flanke des Komparatorsignals S153 und startet damit den Zähler 157. Der Zähler 157 wird ab diesem Zeitpunkt t2 im Takt des Taktsignals CLK hochgezählt, bis dessen Zählerstand den Vergleichswert Z1 erreicht. Das Zählerausgangssignal S157 nimmt dann einen High-Pegel an, um das Ausgangs-Flip-Flop 158 zurückzusetzen und damit das Fehlersignal S15 auf einen Low-Pegel zu setzen.

Die erste Zeitdauer T1 ist in diesem Beispiel die Zeitdauer, die zwischen dem Zeitpunkt t2, zu dem das Strommesssignal V12 den Referenzwert Vref übersteigt, und einem Zeitpunkt t3, zu welchem das Fehlersignal auf einen Low-Pegel gesetzt wird, liegt. Diese erste Zeitdauer ist in dem Beispiel von der Taktfrequenz f_CLK des Taktsignals CLK und dem Vergleichszählerstand Z1 abhängig. Für diese erste Zeitdauer T1 gilt in dem Beispiel:

$$T1 \ = \ 1/f\_CLK \ \cdot \ Z1 \hspace{4cm} (3).$$

Das Setzen des Ausgangs-Flip-Flops 158 erfolgt in dem Beispiel durch das von der Steuerschaltung (14 in Figur 3) bereitgestellte Aktivierungssignal LEN, welches die Spannungsquelle 13 so aktiviert, dass diese eine Versorgungsspannung Vbias an den Ausgangsklemmen 101, 102 bereitstellt.

Eine an die Ausgangsklemmen 101, 102 der Treiber- und Empfängerschaltung 10 während des Betriebs angeschlossene Leitungsverbindung (30 in Figur 1) besitzt unvermeidlich eine parasitäre Kapazität. Diese Kapazität ist umso größer, je länger die Leitungsverbindung zwischen der Treiber- und Empfängerschaltung 10 und einer Satellitenschaltung ist. Aufgrund dieser parasitären Kapazität kann es unmittelbar nach Aktivieren der Spannungsquelle 13 zu einem großen Ausgangsstrom Iout kommen, bis diese parasitäre Kapazität auf den Wert der Versorgungsspannung Vbias aufgeladen ist.

Die Zeitdauer, für die ein derart hoher Ausgangsstrom fließt, kann dabei insbesondere größer sein als die erste Zeitdauer T1, die beispielsweise auf eine Datenblockdauer Td des Übertragungsprotokolls zwischen der Satellitenschaltung und der Treiber- und Empfängerschaltung 10 abgestimmt ist. Um zu vermeiden, dass ein hoher Ausgangsstrom Iout nach Aktivierung der Spannungsquelle 13 als Fehler erkannt wird, ist die Überwachungsschaltung 15 vorzugsweise dazu ausgebildet, einen auf einen Fehler hinweisenden Pegel des Fehlersignals S15 frühestens nach einer zweiten Zeitdauer T2 nach Aktivieren der Spannungsquelle 13 bzw. nachdem das Steuersignal LEN einen Aktivierungspegel angenommen hat zu erzeugen.

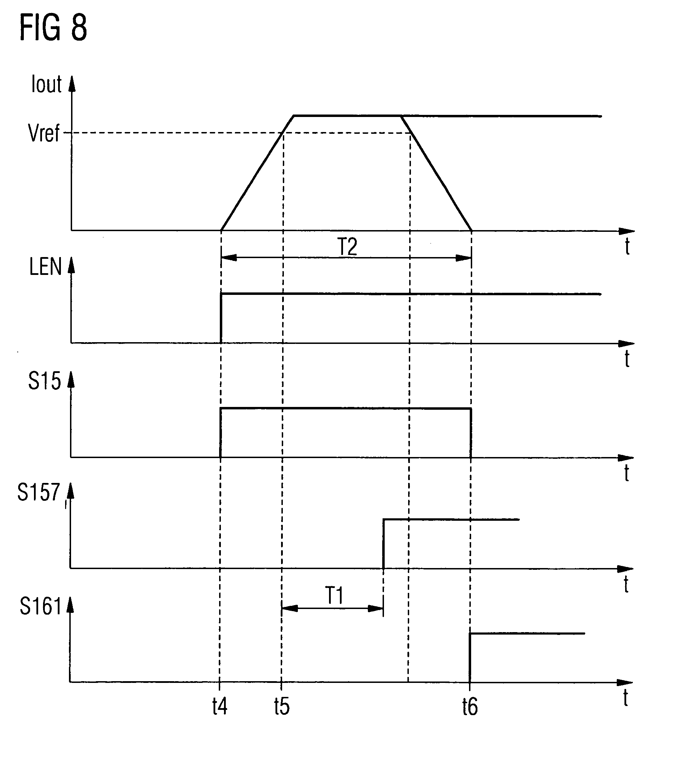

Figur 7 zeigt eine Überwachungsschaltung 15, die eine solche Funktion gewährleistet. Diese Überwachungsschaltung 15 weist zusätzlich zu der in Figur 5 dargestellten Überwachungsschaltung ein Verzögerungsglied 161 auf, dem das Aktivierungssignal LEN zugeführt ist und das dazu ausgebildet ist, eine steigende Flanke des Aktivierungssignals LEN zeitverzögert um die zweite Zeitdauer T2 zu erzeugen. Am Ausgang dieses Verzögerungsgliedes 161 steht ein Verzögerungssignal S161 zur Verfügung. Der zeitliche Verlauf dieses Verzögerungssignals S161 in Abhängigkeit von dem Aktivierungssignal LEN ist in Figur 8 dargestellt. In dem Beispiel nimmt das Aktivierungssignal LEN zu einem Zeitpunkt t4 einen High-Pegel an. Das Verzögerungssignal S161 folgt dem Aktivierungssignal LEN zeitverzögert um die zweite Zeitdauer T2.

Das Strommesssignal V12 übersteigt den Referenzwert Vref in dem Beispiel zu einem Zeitpunkt t5. Das Zählerausgangssignal S157 nimmt nach der ersten Zeitdauer T1 nach diesem Zeitpunkt t5 einen High-Pegel an. Bezugnehmend auf Figur 7 ist dieses Zählersignal S157 zusammen mit dem Vergleichssignal S161 einem UND-Gatter 159 zugeführt, dessen Ausgangssignal dem Rücksetzeingang des Ausgangs-Flip-Flops 158 zugeführt ist. Durch diese UND-Verknüpfung des Vergleichssignals S161 und des Zählerausgangssignals S157 ist sichergestellt, dass das Flip-Flop 158 frühestens nach Ablauf der zweiten Zeitdauer T2 nach einer steigenden Flanke des Aktivierungssignals LEN zurückgesetzt wird, um einen auf einen Fehler hinweisenden Low-Pegel des Fehlersignals S15 zu erzeugen.

In Figur 8 ist strichpunktiert der Fall dargestellt, dass das Strommesssignal V12 noch innerhalb der Zeitdauer T2 nach der steigenden Flanke des Aktivierungssignals LEN auf einen Wert unterhalb der Referenzspannung Vref absinkt. Der Zähler 157 wird dadurch noch vor Ablauf der zweiten Zeitdauer T2 wieder zurückgesetzt, so dass kein Low-Pegel des Fehlersignals S15 erzeugt wird. Ein Low-Pegel des Fehlersignals wird in diesem Fall bezugnehmend auf Figur 6 erst dann erzeugt, wenn zu einem späteren Zeitpunkt das Strommesssignal V12 für eine Zeitdauer länger als die erste Zeitdauer T1 oberhalb des Referenzwertes Vref verbleibt.

Die zweite Zeitdauer T2, nach deren Ablauf das Fehlersignal frühestens auf einen Low-Pegel gesetzt werden kann, beginnt bei dem Ausführungsbeispiel gemäß Figur 7 mit einer steigenden Flanke des Aktivierungssignals LEN. Es besteht auch die Möglichkeit, diese zweite Zeitperiode bzw. Wartedauer T2 erst zu dem Zeitpunkt zu starten, zu dem das Strommesssignal V12 den Referenzwert Vref übersteigt.

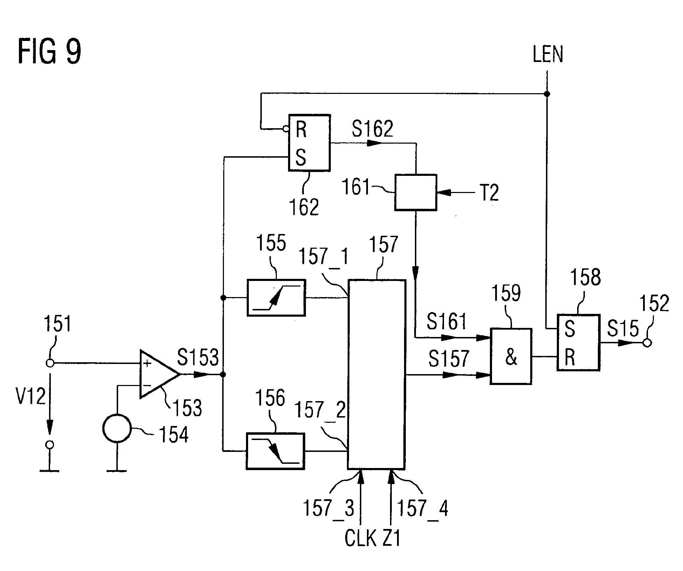

Ein schaltungstechnisches Realisierungsbeispiel für eine Überwachungsschaltung, die eine solche Funktion gewährleistet, ist in Figur 9 dargestellt. Bei dieser Überwachungsschaltung 15 ist ein weiteres Flip-Flop 162 vorhanden, dessen SetzEingang das Vergleichersignal S153 zugeführt ist. Dieses Flip-Flop besitzt einen invertierenden Rücksetzeingang, dem das Aktivierungssignal LEN zugeführt ist. Dieses weitere Flip-Flop 162 wird mit einer fallenden Flanke des Aktivierungssignals LEN zurückgesetzt, also dann, wenn die Spannungsquelle 13 deaktiviert wird, und wird mit einer steigenden Flanke des Vergleichersignals 153 gesetzt. Dieses weitere Flip-Flop 162 wird also dann gesetzt, wenn das Spannungsmesssignal V12 nach einer Aktivierung der Spannungsquelle den Referenzwert Vref zum ersten Mal übersteigt. Ein Ausgangssignal S162 dieses Flip-Flops 162 ist dem Verzögerungsglied 161 zugeführt, welches dieses Ausgangssignal um die Zeitdauer T2 verzögert.

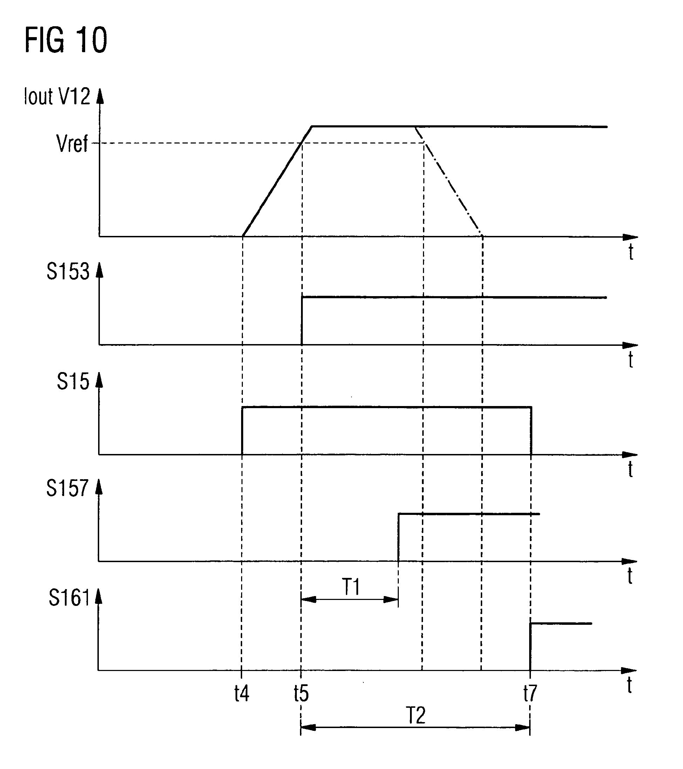

Figur 10 zeigt den zeitlichen Verlauf des Ausgangssignals S162 des weiteren Flip-Flops und des daraus resultierenden zeitverzögerten Signals S161. In dem Beispiel übersteigt das Spannungsmesssignal V12 den Referenzwert Vref zum Zeitpunkt t5, wodurch das Vergleichersignal S153 und das Ausgangssignal S162 des weiteren Flip-Flops 162 einen High-Pegel annehmen. Das Vergleichssignal S161 folgt diesem High-Pegel zeitverzögert um die zweite Zeitdauer T2 zum Zeitpunkt t7. Davon ausgehend, dass das Zählersignal S157 zu diesem Zeitpunkt einen High-Pegel besitzt, wird das Fehlersignal S15 zu diesem Zeitpunkt auf einen Low-Pegel gesetzt.

Bei der in Figur 9 dargestellten Schaltung wird davon ausgegangen, dass das Spannungsmesssignal V12 nach Aktivieren der Spannungsquelle 13 auch im fehlerfreien Zustand den Referenzwert Vref für kurze Zeit übersteigt. Dadurch wird das weitere Flip-Flop 162 kurz nach Aktivierung der Spannungsquelle 13 gesetzt. Hierdurch ist sichergestellt, dass die längere zweite Zeitdauer T2 bei einem Fehlerzustand nur während der Zeitdauer unmittelbar nach Aktivierung der Spannungsquelle abgewartet wird, während zu späteren Zeitpunkten lediglich die kürzere erste Zeitdauer T1 abgewartet wird, bis bei Auftreten eines Fehlerzustandes ein Fehlerpegel des Fehlersignals S15 erzeugt wird.

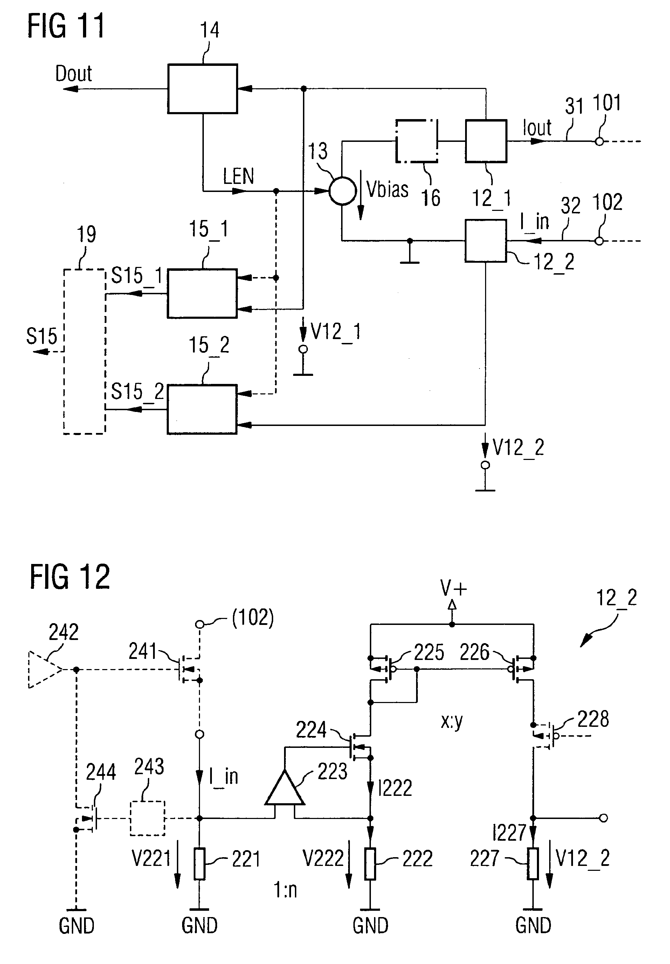

Figur 11 zeigt ein weiteres Ausführungsbeispiel einer Treiber- und Empfängerschaltung. Diese Treiber- und Empfängerschaltung weist zwei Strommessanordnungen 12_1, 12_2 auf, von denen eine zwischen die Spannungsquelle 13 und den ersten Ausgang 101 und die andere zwischen die Spannungsquelle 13 und den zweiten Ausgang 102 geschaltet ist. Diese beiden Strommessanordnungen 12_1, 12_2 erzeugen jeweils ein Strommesssignal V12_1, V12_2. Das Strommesssignal V12_1 der ersten Strommessanordnung 12_1 ist dabei einer ersten Überwachungsschaltung 15_1 zugeführt, während das Strommesssignal V12_2 der zweiten Strommessanordnung 12_2 einer zweiten Überwachungsschaltung 15_2 zugeführt ist. Die beiden Überwachungsschaltungen erzeugen jeweils ein Fehlersignal S15_1, S15_2. Aufbau und Funktionsweise dieser beiden Überwachungsschaltungen 15_1, 15_2 entspricht dem Aufbau und der Funktionsweise einer der zuvor erläuterten Überwachungsschaltungen.

Vorzugsweise sind die Fehlersignale S15_1, S15_2 einem UND-Gatter 17 zugeführt, an dessen Ausgang ein Fehlersignal S15 zur Verfügung steht, das jeweils dann einen auf einen Fehler hinweisenden Low-Pegel annimmt, wenn eines der beiden Fehlersignals S15_1, S15_2 einen Low-Pegel annimmt.

Das Vorsehen zweier Strommessanordnungen 12_1, 12_2 und das entsprechende Vorsehen zweier Überwachungsschaltungen 15_1, 15_2 bietet den Vorteil, dass im Vergleich zu den zuvor erläuterten Überwachungsschaltungen zusätzliche Fehler erkannt werden können. Folgende Fehler werden durch die Treiber- und Empfängerschaltung gemäß Figur 11 detektiert:

- Ein Kurschluss zwischen den Ausgangsklemmen 101, 102. In diesem Fall wird über die Strommesssignale V12_1, V12_2 durch beide Auswerteschaltungen 15_1, 15_2 ein erhöhter Stromfluss detektiert, wodurch beide Fehlersignale S15_1, S15_2 einen Low-Pegel annehmen,

- Ein Kurzschluss, der an den ersten Anschluss 101 angeschlossenen Versorgungsleitung 31 gegen ein Bezugspotential GND. In diesem Fall fließt über die erste Ausgangsklemme 101 ein erhöhter Strom aus der Treiber- und Empfängerschaltung, es fließt allerdings kein Strom über den zweiten Anschluss 102 zurück. Dieser Fehler wird über das erste Strommesssignal 12_1 durch die erste Auswerteschaltung 15_1 detektiert,

- Ein Kurzschluss, der an den zweiten Anschluss 102 angeschlossenen Leitungsverbindung 32 gegen ein positives Versorgungspotential. In diesem Fall fließt ein erhöhter Strom I_in über die zweite Anschlussklemme 102 in die Treiber- und Empfängerschaltung. Dieser Fehler wird über das zweite Strommesssignal V12_2 durch die zweite Auswerteschaltung 15_2 detektiert.

Die Strommessanordnungen 12_1 kann entsprechend der in Figur 4 dargestellten Strommessanordnung 12 realisiert sein.

Eine mögliche Schaltung zur Realisierung der Strommessanordnung 12_2 ist in Figur 12 dargestellt. Bei dieser Schaltung ist ein Stromerfassungswiderstand 221 zwischen den zweiten Anschluss 102 und Bezugspotential GND geschaltet. Der diesen Stromerfassungswiderstand 221 durchfließende Eingangsstrom I_in wird durch eine Regel- und Stromspiegelanordnung auf einen Ausgangswiderstand 227 der Strommessanordnung 12_2 abgebildet, über dem das Strommesssignal V12_2 zur Verfügung steht. Die Regel- und Stromspiegelanordnung weist einen weiteren Widerstand 222 auf, der in Reihe zu einem Regeltransistor 224 zwischen ein Versorgungspotential V+, beispielsweise ein Logik-Versorgungspotential, und Bezugspotential GND geschaltet sind. Der Regeltransistor 224 ist durch einen Operationsverstärker 223 angesteuert, der Spannungen V221, V22 über dem Stromerfassungswiderstand 221 und über dem weiteren Widerstand 222 vergleicht und der den Regeltransistor 224 so ansteuert, dass die Spannungsabfälle V221, V222 über diesen beiden Widerständen identisch sind. Ein den weiteren Widerstand I222 durchfließenden Strom ist dann über das Verhältnis dieser beiden Widerstände 221, 222 proportional zu dem Eingangsstrom I_in. Dabei gilt:

$$I222 = 1/n \cdot I\_in \qquad\qquad (4).$$

Der den weiteren Widerstand 222 durchfließende Strom I222 wird mittels eines Stromspiegels auf den Ausgangswiderstand 227 abgebildet. Der Stromspiegel weist einen als Diode verschalteten Eingangtransistor 225 auf, der in Reihe zu dem weiteren Widerstand 222 und den Regeltransistor 224 geschaltet ist. Ein Ausgangstransistor 226 dieses Stromspiegels ist in Reihe zu dem Ausgangswiderstand 227 zwischen das Versorgungspotential V+ und Bezugspotential GND geschaltet. Ein den Ausgangswiderstand 227 durchfließender Strom I227 ist über das Stromspiegelverhältnis des Stromspiegels 225, 226 proportional zu dem Strom I222 durch den weiteren Widerstand. Insgesamt ist die über dem Ausgangswiderstand 227 anliegende Spannung V12_2 bzw. das Strommesssignal proportional zu dem Eingangsstrom I_in, wobei gilt:

$$V12\_2 = R227 \cdot n \cdot y/x \cdot I\_in \qquad\qquad (5).$$

R227 bezeichnet dabei den Widerstandswert des Ausgangswiderstandes 227, y/x bezeichnet das Verhältnis zwischen der Fläche des Ausgangstransistors 226 zur Fläche des Eingangstransistors 225 des Stromspiegels und n bezeichnet des Verhältnis zwischen dem Widerstandswert des weiteren Widerstandes 222 und dem Stromerfassungswiderstand 221.

Optional ist bei der in Figur 12 dargestellten Anordnung ein weiterer Transistor 228 in Reihe zu dem Ausgangswiderstand 227 geschaltet, der an ein nicht näher dargestelltes Referenzpotential angeschlossen ist und der das Auftreten des sogenannten "Early-Effekts" verhindert.

Vorzugsweise ist dem Anschluss 102 außerdem eine Strombegrenzungsanordnung vorgeschaltet, die den Eingangsstrom I_in begrenzt. Diese Strombegrenzungsanordnung weist einen dem Eingang 102 vorgeschalteten Transistor 241 auf, der im Normalbetriebszustand durch eine Treiberschaltung 242 leitend angesteuert ist. Eine Messanordnung 243 erfasst den Spannungsabfall über dem Stromerfassungswiderstand 221 und damit den Eingangsstrom I_in. Diese Messanordnung steuert einen weiteren Transistor 244 an, dessen Laststrecke zwischen den Steueranschluss des Eingangstransistors 241 und Bezugspotential GND geschaltet ist. Abhängig vom Wert des erfassten Eingangsstromes I_in wird der Eingangstransistor 241 über die Strommessanordnung 243 und diesen weiteren Transistor 244 abgeregelt, um den Eingangsstrom I_in auf einen vorgegebenen Maximalwert zu begrenzen.

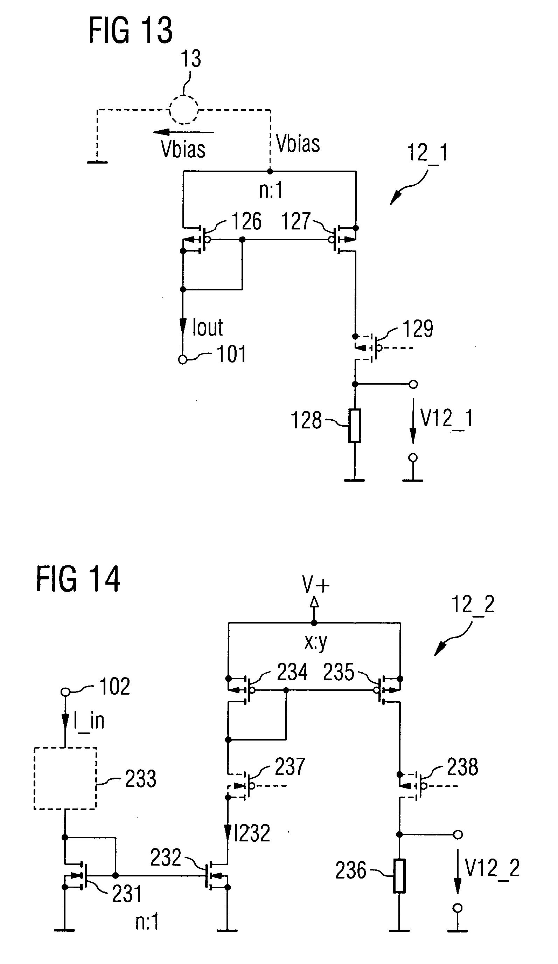

Bezugnehmend auf die Figuren 13 und 14 besteht auch die Möglichkeit, die beiden Strommessanordnungen 12_1, 12_2 in Form eines Stromspiegels mit zwei Stromspiegeltransistoren, von denen einer als Diode verschaltet ist, zu realisieren.

Figur 13 zeigt ein alternatives Ausführungsbeispiel für die erste Strommessanordnung 12_1 unter Verwendung eines solchen Stromspiegels und Figur 14 zeigt ein alternatives Ausführungsbeispiel für die zweite Strommessanordnung 12_2 unter Verwendung eines Stromspiegels.

Die in Figur 13 dargestellte Alternative der ersten Strommessanordnung 12_2 weist einen Stromspiegel mit einem als Diode verschalteten Eingangstransistor 126 und einem Ausgangstransistor 127 auf. Die Gate-Anschlüsse dieser beiden Transistoren 126, 127 sind wie bei Stromspiegeln üblich miteinander verbunden. Der Eingangstransistor 126 ist zwischen die (in Figur 13 gestrichelt dargestellte) die Vorspannung Vbias liefernde Spannungsquelle 13 und den ersten Anschluss 101 geschaltet. Der an die Ausgangsklemme 101 fließende Ausgangsstrom Iout wird über den Stromspiegel 126, 127 auf einen Messwiderstand bzw. Ausgangswiderstand 128 abgebildet. Der diesen Ausgangswiderstand durchfließende Strom I128 ist über das Stromspiegelverhältnis n : 1 proportional zu dem Ausgangsstrom Iout. Entsprechendes gilt für die über dem Ausgangswiderstand 128 anliegende Ausgangsspannung V12_1 bzw. das Strommesssignal der ersten Strommessanordnung 12_1. Für dieses Strommesssignal gilt:

$$V12\_1 = R128 \cdot 1/n \cdot Iout \qquad\qquad (6).$$

Mit R128 ist dabei der Widerstandswert des Ausgangswiderstandes bezeichnet, n bezeichnet das Verhältnis zwischen der Transistorfläche des Eingangstransistors 126 und der Transistorfläche des Ausgangstransistors 127 des Stromspiegels.

Optional ist bei der in Figur 13 dargestellten Strommessanordnung 12_1 zur Vermeidung des Early-Effekts ein weiterer Transistor 129, der an eine nicht näher dargestellte Referenzspannungsquelle angeschlossen ist, zwischen den Ausgangstransistor 127 und den Ausgangswiderstand 128 geschaltet.

Eine Alternative Ausgestaltung der zweiten Strommessanordnung 12_2 unter Verwendung eines Stromspiegels ist in Figur 14 dargestellt. Diese Strommessanordnung 12_2 unterscheidet sich von der in Figur 12 dargestellten im Wesentlichen dadurch, dass anstelle des Stromerfassungswiderstandes und der Regelanordnung mit dem Operationsverstärker, dem Regeltransistor und dem weiteren Widerstand ein Stromspiegel mit einem als Diode verschalteten Eingangstransistor 231 und einem Ausgangstransistor 232 vorhanden ist. Der Eingangstransistor 231 ist dabei zwischen den zweiten Anschluss 102 und Bezugspotential GND geschaltet. Dieser Stromspiegel 231, 232 bildet den den Eingangstransistor 231 durchfließenden Eingangsstrom I_in auf einen den Ausgangstransistor 232 durchfließenden Strom I232 ab. Über einen weiteren Stromspiegel 234, 235 wird dieser Strom I232 auf einen Ausgangswiderstand 236 abgebildet, an welchem das zweite Strommesssignal V12_2 zur Verfügung steht. Der weitere Stromspiegel weist einen als Diode verschalteten Eingangstransistor 234 auf, der zwischen ein Versorgungspotential V+ und den Ausgangstransistor 232 des ersten Stromspiegels geschaltet ist. Ein Ausgangstransistor 235 dieses weiteren Stromspiegels ist zwischen das Versorgungspotential V+ und den Ausgangswiderstand 235 geschaltet. Das Strommesssignal V12_2 ist auch bei dieser Strommessanordnung 12_2 proportional zu dem Eingangsstrom I_in, wobei gilt:

$$V12\_2 = R236 \cdot y/x \cdot n \cdot I\_in \qquad\qquad (7).$$

R236 bezeichnet dabei den Widerstandswert des Ausgangswiderstandes 236, n bezeichnet das Verhältnis zwischen der Transistorfläche des Eingangstransistors 231 und des Ausgangstransistors 232 des ersten Stromspiegels, und x/y bezeichnet das Flächenverhältnis zwischen der Transistorfläche des Eingangstransistors 234 und der Transistorfläche des Ausgangstransistors 235 des weiteren Stromspiegels.

Optional sind auch bei dieser Strommessanordnung weitere Transistoren 237, 238 in Reihe zu den Transistoren des weiteren Stromspiegels geschaltet, die an nicht näher dargestellte Referenzpotentiale angeschlossen sind, und die dazu dienen, den Early-Effekt zu vermeiden.

Optional ist auch bei dieser Strommessanordnung 12_2 einen Strombegrenzungsanordnung 233 vorhanden, die entsprechend der in Figur 12 erläuterten Strombegrenzungsanordnung ausgebildet sein kann.

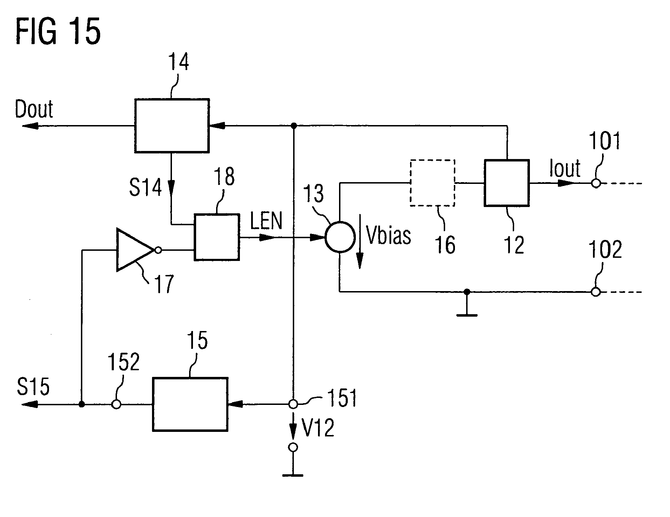

Figur 15 zeigt ein weiteres Ausführungsbeispiel einer Treiber- und Empfängerschaltung. Bei dieser Schaltung erfolgt die Erzeugung des Aktivierungssignals LEN der Spannungsquelle 13 abhängig von einem durch die Auswerteschaltung 14 erzeugten Steuersignal und abhängig von dem Fehlersignal, wobei das Aktivierungssignal durch ein UND-Gatter aus dem Fehlersignal und dem Steuersignal S14 erzeugt ist. Unter der Annahme, dass das Fehlersignal S15 im Falle eines detektierten Fehlers einen Low-Pegel annimmt, wird die Spannungsquelle bei dieser Anordnung nach Detektion eines Fehlers unmittelbar deaktiviert.

Bezugszeichenliste

| CLK | Taktsignal |
| Dout | Ausgangssignal |
| GND | Bezugspotential |

| | |
|---|---|
| I_in | Eingangsstrom |
| I1 | Messstrom |
| I1 | Strom |
| I222, I227 | Ströme |
| I232 | Strom |
| Iout | Ausgangsstrom |
| LEN | Aktivierungssignal |
| S15 | Fehlersignal |
| S15_1, S15_2 | Fehlersignale |
| S153 | Vergleichersignal |
| S157 | Zählersignal |
| S161 | Verzögerungssignal |
| S162 | Flip-Flop-Ausgangssignal |
| S24 | Steuersignal |
| S26 | Sensorsignal |
| T1 | erste Zeitdauer |
| T2 | zweite Zeitdauer |
| V12 | Strommesssignal |
| V221, V222 | Spannungen |
| Vbias | Versorgungsspannung |
| Vint | interne Versorgungsspannung |
| Vref | Referenzsignal |
| Vs | Versorgungspotential |
| Z1 | Vergleichszählerstand |
| ΔI | Strom |
| 41 | Kurzschluss gegen ein Versorgungspotential |
| 10 | Treiber- und Empfängerschaltung |
| 12 | Strommessanordnung |
| 13 | Spannungsversorgungsanordnung, Spannungsquelle |
| 14 | Steuerschaltung |
| 15 | Überwachungsschaltung |
| 16 | UND-Gater |
| 17 | Inverter |
| 20 | Satellitenschaltung |
| 24 | Steuerschaltung |
| 25 | Spannungsversorgungsanordnung |
| 26 | Sensor |
| 15_1, 15_2 | Überwachungsschaltungen |
| 30 | Leitungsverbindung |
| 42 | Kurzschluss der Anschlussklemmen |
| 21, 22 | Stromquellen |
| 101, 102 | Anschlüsse |
| 121, 122 | Widerstände |
| 123 | Operationsverstärker |
| 124 | Transistor |
| 125 | Stromerfassungswiderstand |
| 126, 127 | Stromspiegeltransistoren, p-Kanal-Transistoren |
| 127 | Zähler |
| 128 | Stromerfassungswiderstand |
| 128 | Strommesswiderstand, Ausgangswiderstand |
| 129 | p-Kanal-Transistor |
| 145 | Referenzspannungsquelle |
| 151 | Eingang der Überwachungsschaltung |
| 152 | Ausgang der Überwachungsschaltung |
| 153 | Vergleicher |
| 155, 156 | Flankendetektoren |
| 157_1, 157_2 | Eingänge des Zählers |
| 157_3 | Takteingang des Zählers |

| | |
|---|---|
| 157_4 | Referenzeingang des Zählers |
| 158 | Flip-Flop |
| 159 | UND-Gatter |
| 161 | Verzögerungsglied |
| 162 | Flip-Flop |
| 201, 202 | Anschlussklemmen |
| 221 | Stromerfassungswiderstand |
| 222 | Widerstand |
| 223 | Operationsverstärker |
| 224 | Regeltransistor |
| 225, 226 | Stromspiegeltransistoren, p-Kanal-Transistoren |
| 226 | Ausgangswiderstand |
| 227 | Ausgangswiderstand |
| 228 | p-Kanal-Transistor |
| 231, 232 | Stromspiegeltransistoren, n-Kanal-Transistoren |
| 234, 235 | Stromspiegeltransistoren, p-Kanal-Transistoren |
| 237 | n-Kanal-Transistor |
| 238 | p-Kanal-Transistor |
| 241, 244 | n-Kanal-Transistoren |
| 242 | Treiberschaltung |
| 243 | Messanordnung |

**Patentansprüche**

1. Treiber- und Empfängerschaltung, die folgende Merkmale aufweist:

   - wenigstens eine Ausgangsklemme (101, 102) zum Anschließen einer Leitungsverbindung (31, 32),
   - eine an die wenigstens eine Ausgangsklemme (101, 102) angeschlossene Spannungsversorgungsanordnung (13),
   - eine an die wenigstens eine Ausgangsklemme (101) angeschlossene Strommessanordnung (12), die dazu ausgebildet ist, einen Strom (Iout) an der wenigstens einen Anschlussklemme (101) zu erfassen und ein von diesem Strom abhängiges Strommesssignal (V12) zu erzeugen,
   - eine Steuerschaltung (12), der das Strommesssignal zugeführt ist,

   **gekennzeichnet** d u r c h

   - wenigstens eine Überwachungsschaltung (15; 15_1, 15_2), die dazu ausgebildet ist, den Strom (I_out) an der wenigstens einen Anschlussklemme (101) zu erfassen und ein Fehlersignal (S15; S15_1, S15_2) auszugeben, wenn der Strom für eine Zeitdauer (T2), die länger als eine vorgegebene erste Zeitdauer (T1) ist, oberhalb eines vorgegebenen Schwellenwertes liegt.

2. Treiber- und Empfängerschaltung nach Anspruch 1, bei der die Spannungsversorgungsanordnung (13) über ein Steuersignal (LEN) durch die Steuerschaltung (12) aktivierbar und deaktivierbar ist.

3. Treiber- und Empfängerschaltung nach Anspruch 1 oder 2, bei der das Fehlersignal (S15; S15_1, S15_2) der Steuerschaltung (14) zugeführt ist und bei der die Steuerschaltung (14) dazu ausgebildet ist, die Spannungsversorgungsanordnung (13) über das Steuersignal (LEN) zu deaktivieren, wenn das Fehlersignal (S15; S15_1, S15_2) einen auf einen Fehler hinweisenden Pegel aufweist.

4. Treiber- und Empfängerschaltung nach einem der vorangehenden Ansprüche, bei der das Steuersignal (LEN) der wenigstens einen Überwachungsschaltung (15; 15_1, 15_2) zugeführt ist und bei der die Überwachungsschaltung dazu ausgebildet ist, nach einem Pegelwechsel des Steuersignals (LEN) auf einen die Spannungsversorgungsanordnung (13) aktivierenden Pegel das Fehlersignal frühestens nach Ablauf einer zweiten Zeitdauer (T2) nach diesem Pegelwechsel zu erzeugen.

5. Treiber- und Empfängerschaltung nach einem der vorangehenden Ansprüche, bei der der wenigstens einen Überwachungsschaltung (15; 15_1, 15_2) das Strommesssignal (V12) zur Erfassung des Stromes an der wenigstens einen Ausgangsklemme (101) zugeführt ist.

6. Treiber- und Empfängerschaltung nach einem der Ansprüche 1 bis 4, bei der die wenigstens eine Überwachungsschaltung eine an die wenigstens eine Ausgangsklemme (101) angeschlossene Strommessanordnung aufweist, die dazu ausgebildet ist ein von dem Strom an dieser Ausgangsklemme abhängiges Strommesssignal zu erzeugen.

7. Treiber- und Empfängerschaltung nach einem der vorangehenden Ansprüche, bei der die wenigstens eine Überwachungsschaltung (15; 15_1, 15_2) folgende Merkmale aufweist:

   - eine Vergleicheranordnung (153) zum Vergleich des Strommesssignals (V12) mit einem Referenzwert (Vref), die ein von diesem Vergleich abhängiges Vergleichssignal (S153) bereitstellt,
   - eine Zeitmessanordnung (155, 156, 157), die dazu ausgebildet ist, die zeitliche Dauer eines vorgegebenen Pegels des Vergleichssignals (S153) auszuwerten und ein davon abhängiges Zeitmesssignal (S157) zu erzeugen, von dem das Fehlersignal (S15) abhängig ist.

8. Treiber- und Empfängerschaltung nach Anspruch 7, bei der die Überwachungsschaltung eine Logikschaltung (158) aufweist, der das Zeitmesssignal (S157) und das Steuersignal (LEN) zugeführt ist und die das Fehlersignal (S15) bereitstellt.

9. Treiber- und Empfängerschaltung nach einem der vorangehenden Ansprüche, die eine erste und eine zweite Anschlussklemme (101, 102), sowie eine erste Überwachungsschaltung (15_1), die dazu ausgebildet ist, einen Strom (Iout) an der ersten Ausgangsklemme (101) zu überwachen, und eine zweite Überwachungsschaltung (15_2), die dazu ausgebildet ist, einen Strom (I_in) an der zweiten Ausgangsklemme (102) zu überwachen, aufweist.

10. Treiber- und Empfängerschaltung nach einem der vorangehenden Ansprüche, bei der die Steuerschaltung (14) eine Dekodierschaltung aufweist, der das Strommesssignal zugeführt ist.

11. Verfahren zur Überwachung einer an eine Treiber- und Empfängerschaltung (10) angeschlossenen Leitungsverbindung (31, 32), das folgende Verfahrensschritte umfasst:

   - Ermitteln eines in die Leitungsverbindung oder aus der Leitungsverbindung fließenden Stromes (Iout) und Erzeugen eines Strommesswertes (V12),
   - Vergleichen des Strommesswertes (V12) mit einem Referenzwert (Vref), und
   - Erzeugen eines Fehlersignals, wenn der Strommesswert den Referenzwert für eine Zeitdauer übersteigt, die länger als eine vorgegebene erste Zeitdauer (T2) ist.

12. Verfahren nach Anspruch 11, bei dem ein Fehlersignal frühestens nach Ablauf einer zweiten Zeitdauer (T1) nach einem Pegelwechsel einer an der Leitungsverbindung anliegenden Spannung (Vbis) erzeugt wird.

FIG 1  Stand der Technik

FIG 2  Stand der Technik

## FIG 3

Dout ← 14

LEN →

13 Vbias

16 12 Iout 31 101

32 102

GND

S15 ← 152 15 151

V12

## FIG 4

Vbias

122 121

12

123

101 Iout

124

I1

V12 125

FIG 5

FIG 7

# FIG 6

FIG 8

# FIG 9

# FIG 10

## FIG 11

## FIG 12

# FIG 13

# FIG 14

# FIG 15

**EP 1 734 657 A1**

| | Europäisches Patentamt | **EUROPÄISCHER RECHERCHENBERICHT** | Nummer der Anmeldung EP 06 00 5811 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 943 205 A (ERCKERT ET AL) 24. August 1999 (1999-08-24) * Zusammenfassung * * Spalte 1, Zeile 10 - Spalte 2, Zeile 15 * * Spalte 2, Zeile 34 - Zeile 42 * * Spalte 2, Zeile 61 - Zeile 67 * * Spalte 3, Zeile 55 - Zeile 65 * * Ansprüche 1-12 * ----- | 1-12 | INV. H03K17/082 |
| X | US 4 736 267 A (KARLMANN ET AL) 5. April 1988 (1988-04-05) * Zusammenfassung * * Spalte 1, Zeile 15 - Zeile 48 * * Spalte 1, Zeile 60 - Spalte 3, Zeile 27 * * Spalte 3, Zeile 58 - Zeile 63 * * Spalte 8, Zeile 60 - Spalte 9, Zeile 5 * * Spalte 9, Zeile 21 - Zeile 44 * ----- | 1,9 | |
| X | DE 102 56 057 B3 (SEMIKRON ELEKTRONIK GMBH) 19. Mai 2004 (2004-05-19) * Zusammenfassung * * Seite 6, Spalte 1, Absatz 5 - Spalte 2, Absatz 7 * ----- | 1 | RECHERCHIERTE SACHGEBIETE (IPC) H03K H04L |

Der vorliegende Recherchenbericht wurde für alle Patentansprüche erstellt

| Recherchenort | Abschlußdatum der Recherche | Prüfer |
|---|---|---|
| Den Haag | 13. September 2006 | Dhibi, Youssef |

**EP 1 734 657 A1**

**ANHANG ZUM EUROPÄISCHEN RECHERCHENBERICHT**
**ÜBER DIE EUROPÄISCHE PATENTANMELDUNG NR.**

EP 06 00 5811

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 5943205 | A | 24-08-1999 | DE | 19702602 C1 | 20-08-1998 |
| US 4736267 | A | 05-04-1988 | KEINE | | |
| DE 10256057 | B3 | 19-05-2004 | AT | 288149 T | 15-02-2005 |
| | | | EP | 1434349 A1 | 30-06-2004 |

Für nähere Einzelheiten zu diesem Anhang : siehe Amtsblatt des Europäischen Patentamts, Nr.12/82

24